# EUROPÄISCHE PATENTSCHRIFT

(11) **EP 1 169 951 B1**
(45) Veröffentlichungstag und Bekanntmachung des Hinweises auf die Patenterteilung: **16.06.2004**
(21) Anmeldenummer: 01115810.2
(22) Anmeldetag: 28.06.2001
(51) Int. Cl.: A47F 7/02, F16M 13/00

(54) **Haltevorrichtung für Brillen**
Supporting device for spectacles
Support pour lunettes

(30) Priorität: 30.06.2000 DE 20011464 U
(43) Veröffentlichungstag der Anmeldung: 09.01.2002
(73) Patentinhaber: Landauer, Gerd, Dr. Ing., 85598 Baldham (DE)
(72) Erfinder: Landauer, Gerd, Dr. Ing., 85598 Baldham (DE)
(74) Vertreter: Hofstetter, Alfons J., Dr.rer.nat.

(56) Entgegenhaltungen:
- US-A- 2 241 205
- US-A- 2 817 487
- US-A- 5 493 349

## Beschreibung

Die vorliegende Erfindung betrifft eine Haltevorrichtung für Brillen, insbesondere zur Befestigung an Wänden, Spiegeln oder anderen Flächen, wie diese bereits z.B. aus US-A-2 241 205 bekannt ist.

Brillenträger stehen in der täglichen Praxis oft vor dem Problem ihre Brille sicher ablegen und aufbewahren zu müssen. Insbesondere bei der täglichen Körperpflege besteht das Problem, dass ein geeigneter Platz für die Ablage der Brille im Bad, der Toilette oder ähnlichen Räumen nicht vorhanden ist. Bekannte Brillenhalterungen bestehen üblicherweise aus einer Art Behälter, in den die Brille mit eingeklappten Brillenbügeln hineingelegt wird. Hierbei ergibt sich jedoch bereits ein weiteres Problem, nämlich daß durch das häufige Einklappen der Bügel diese oder das gesamte Brillengestell verbogen werden. Insbesondere bei heute üblichen dünnen Brillengestellen aus Kunststoff oder Metall besteht die Gefahr einer Beschädigung durch zu häufiges oder zu starkes Bewegen der Brillenbügel.

Es ist daher Aufgabe der vorliegenden Erfindung, eine Haltevorrichtung für Brillen der eingangs genannten Art bereitzustellen, die eine sichere Ablage und Aufbewahrung einer Brille unter Vermeidung einer Beschädigung der Brille gewährleistet.

Zur Lösung dieser Aufgabe dient eine gattungsgemäße Haltevorrichtung gemäß den Merkmalen des Hauptanspruchs 1.

Vorteilhafte Ausgestaltungen sind in den Unteransprüchen beschrieben.

Eine erfindungsgemäße Haltevorrichtung für Brillen weist zwei Auflageflächen zur Auf- und Ablage der Brillengläser der Brille auf, wobei die Auflageflächen an jeweils einem Ende eines Haltearms angeordnet sind und die Auflageflächen mit den Haltearmen zueinander beweglich ausgebildet sind. Dadurch ist erfindungsgemäß gewährleistet, daß einerseits die Brille, die vorteilhafterweise mit den Innenseiten der Brillengläser auf den Auflageflächen zu liegen kommt, schnell und sicher abgelegt werden kann und andererseits nicht die Notwendigkeit besteht, die Brillenbügel einklappen zu müssen, da die Auflageflächen zwischen den Bügeln zu liegen kommen. Mögliche Beschädigungen der Brille werden dadurch vermieden, daß die Notwendigkeit des Einklappens der Brillenbügel und damit eine mechanische Beanspruchung der Brille vorteilhafterweise entfällt. Die Brille wird erfindungsgemäß flächig auf die Auflageflächen aufgelegt. Des weiteren ist durch die Beweglichkeit der Auflageflächen mit den Haltearmen gewährleistet, daß die Haltevorrichtung für jede Brillengröße verwendet werden kann.

In einer vorteilhaften Ausgestaltung der Erfindung sind die Auflageflächen mit den jeweiligen Haltearmen einstückig ausgebildet. Dadurch ergibt sich die Möglichkeit einer einfachen und kostengünstigen Herstellung der Haltevorrichtung, zum Beispiel durch ein entsprechendes Spritzgussverfahren.

In einer weiteren vorteilhaften Ausgestaltung der erfindungsgemäßen Haltevorrichtung sind die Haltearme mittels einer Dreh- oder Gelenkverbindung zueinander beweglich ausgebildet. Es ist aber auch möglich, daß die Haltearme aus einem elastischen und biegsamen Material bestehen. In der letztgenannten Ausführungsform kann auf die Dreh- oder Gelenkverbindung verzichtet werden, da die Haltearme mit den entsprechenden Auflageflächen in die gewünschte Stellung gebogen werden können. Zudem besteht hierbei die Möglichkeit, daß die Haltearme und/oder die entsprechenden Auflageflächen einstückig ausgebildet sind, was wiederum zu einer Vereinfachung der Herstellung der Haltevorrichtung führt.

In einer weiteren vorteilhaften Ausgestaltung der Erfindung sind die Auflageflächen der Haltevorrichtung kreisförmig oder ringförmig ausgebildet. Durch eine derartige Ausgestaltung der Auflageflächen ist gewährleistet, dass nahezu jedes Brillenglas, unabhängig von seiner Form, sicher auf den Auflageflächen zu liegen kommt.

In einer weiteren vorteilhaften Ausgestaltung der erfindungsgemäßen Haltevorrichtung weisen die Auflageflächen einen auswechselbaren Überzug zur Auflage der Brillengläser auf. Der Überzug ist dabei vorteilhafterweise konvex ausgebildet und besteht aus Stoff, Papier oder Kunststoff. Neben einer sicheren Auflage der Brillengläser ist dadurch auch gewährleistet, daß die Brillengläser nicht durch die Auflageflächen selbst verschmutzt oder verkratzt werden.

Weitere Einzelheiten, Merkmale und Vorteile der Erfindung ergeben sich aus einem in den folgenden Zeichnungen dargestelltem Ausführungsbeispiel. Es zeigen:
- Figur 1: eine schematische Darstellung der erfindungsgemäßen Haltevorrichtung; und
- Figur 2: eine schematische Schnittdarstellung durch die Auflageflächen der erfindungsgemäßen Haltevorrichtung gemäß Figur 1.

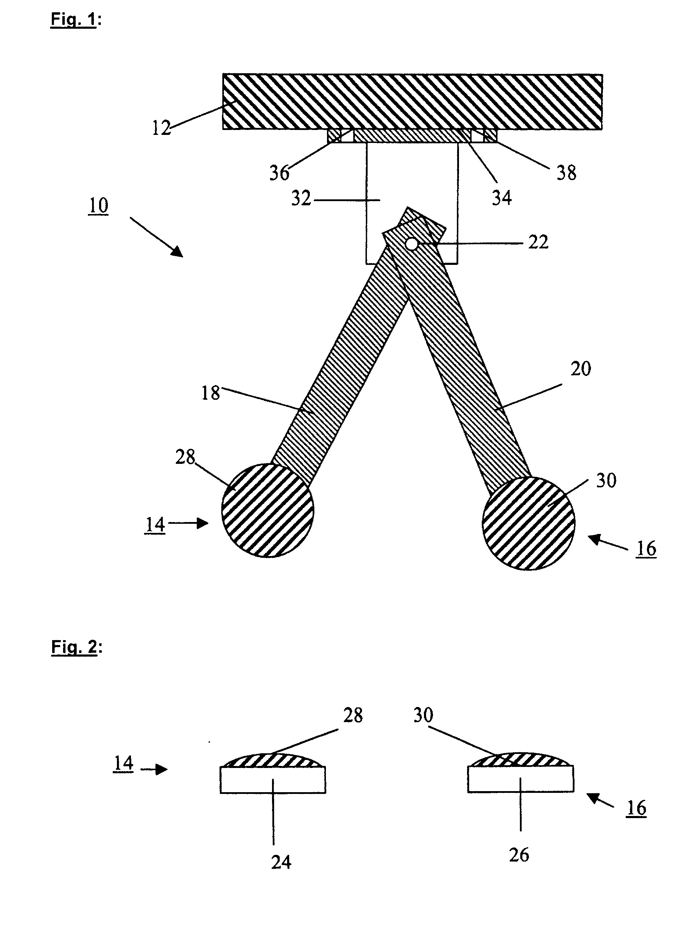

Figur 1 zeigt eine schematische Darstellung einer Haltevorrichtung 10, die mittels einer Befestigungsvorrichtung 34 an einer Wand 12 mit Befestigungsmitteln 36, 38 lösbar befestigt ist. Die Haltevorrichtung 10 kann aber auch an anderen Flächen, wie zum Beispiel einem Spiegel befestigt werden. Man erkennt, dass die Haltevorrichtung 10 zwei Auflageflächen 14, 16 zur Auf- und Ablage der Brillengläser einer Brille (nicht dargestellt) aufweist. Die Auflageflächen 14, 16 sind dabei jeweils an einem Ende eines entsprechenden Haltearms 18, 20 angeordnet. Die Haltearme 18, 20 mit den Auflageflächen 14, 16 sind mittels einer Dreh- oder Gelenkverbindung 22, die auf einem mit der Befestigungsvorrichtung 34 verbundenen Auflageelement 32 angeordnet ist, zueinander beweglich ausgebildet.

Es ist aber auch möglich, daß die Haltearme 18, 20 aus einem elastischen und biegsamen Material bestehen, so daß auf eine Dreh- oder Gelenkverbindung verzichtet werden kann.

Die Auflageflächen 14, 16 sind kreisförmig bzw. tellerartig ausgebildet und liegen in einer gemeinsamen Ebene. Andere Formen für die Auflageflächen sind jedoch ebenfalls denkbar. So können diese ringförmig, quadratisch oder rechteckig mit oder ohne Öffnungen sowie stab- oder kreuzförmig ausgebildet sein. Entscheidend hierbei ist, daß eine genügend große Auflagefläche für den sicheren Halt der Brillengläser gegeben ist.

Des weiteren erkennt man, daß die Auflageflächen 14, 16 jeweils einen auswechselbaren Überzug 28, 30 zur Auflage der Brillengläser aufweisen. Der Überzug 28, 30 liegt dabei jeweils auf einer Auflageflächenbasis 24, 26 auf und ist konvex ausgebildet (vgl. Figur 2). Als Material für die Überzüge 28, 30 eignen sich elastische und weiche Materialien, die eine Verschmutzung oder Beschädigung der aufliegenden Brillengläser verhindern. Insbesondere bestehen die Überzüge 28, 30 aus Stoff, Papier oder Kunststoff.

Die Auflageflächen 14, 16 und die Haltearme 18, 20 bestehen aus Metall, einer Metalllegierung, Keramik, Holz, Glas oder Kunststoff. Es ist möglich, daß die Haltearme 18, 20 und/oder die entsprechenden Auflageflächen 14, 16 oder die gesamte Haltevorrichtung 10 einstückig ausgebildet sind.

## Patentansprüche

1. Haltevorrichtung für Brillen, insbesondere zur Befestigung an Wänden, Spiegeln oder anderen Flächen, wobei
die Haltevorrichtung (10) zwei Auflageflächen (14, 16) zur Auf- und Ablage der Brillengläser der Brille aufweist, **dadurch gekennzeichnet, daß** die Auflageflächen (14, 16) an jeweils einem Ende eines Haltearms (18, 20) angeordnet sind und die Auflageflächen (14, 16) mit den Haltearmen (18, 20) zueinander beweglich ausgebildet sind.

2. Haltevorrichtung nach Anspruch 1,
**dadurch gekennzeichnet,**
**daß** die Auflageflächen (14, 16) mit dem jeweiligen Haltearm (18, 20) einstückig ausgebildet sind.

3. Haltevorrichtung nach Anspruch 1 oder 2,
**dadurch gekennzeichnet,**
**daß** die Haltearme (18, 20) mittels einer Dreh- oder Gelenkverbindung (22) zueinander beweglich sind.

4. Haltevorrichtung nach Anspruch 1,
**dadurch gekennzeichnet,**
**daß** die Haltearme (18, 20) aus einem elastischen und biegsamen Material bestehen.

5. Haltevorrichtung nach Anspruch 4,
**dadurch gekennzeichnet,**
**daß** die Haltearme (18, 20) und/oder die entsprechenden Auflageflächen (14, 16) einstückig ausgebildet sind.

6. Haltevorrichtung nach einem der vorhergehenden Ansprüche,
**dadurch gekennzeichnet,**
**daß** die Auflageflächen (14, 16) kreis- oder ringförmig, quadratisch oder rechteckig, stab- oder kreuzförmig ausgebildet sind.

7. Haltevorrichtung nach einem der vorhergehenden Ansprüche,
**dadurch gekennzeichnet,**
**daß** die Auflageflächen (14, 16) einen auswechselbaren Überzug (28, 30) zur Auflage der Brillengläser aufweisen.

8. Haltevorrichtung nach Anspruch 7,
**dadurch gekennzeichnet,**
**daß** der Überzug (28, 30) konvex ausgebildet ist.

9. Haltevorrichtung nach Anspruch 7 oder 8,
**dadurch gekennzeichnet,**
**daß** der Überzug (28, 30) aus Stoff, Papier oder Kunststoff besteht.

10. Haltevorrichtung nach einem der vorhergehenden Ansprüche,
**dadurch gekennzeichnet,**
**daß** die Haltevorrichtung (10) mittels einer Befestigungsvorrichtung (34) an einer Wand, einem Spiegel oder einer anderen Fläche lösbar befestigt wird.

11. Haltevorrichtung nach einem der vorhergehenden Ansprüche,
**dadurch gekennzeichnet,**
**daß** die Auflageflächen (14, 16) und die Haltearme (18, 20) aus Metall, einer Metalllegierung, Keramik, Holz, Glas oder Kunststoff bestehen.

## Claims

1. Holding device for spectacles, in particular for being fixed to walls, mirrors or other surfaces, wherein the holding device (10) has two support surfaces (14, 16) for the spectacle lenses of the spectacles to be rested and placed upon,
**characterized in that**
said support surfaces (14, 16) each are provided at one end of a holding arm (18, 20) and said support surfaces (14, 16) with said holding arms (18, 20) are designed movably towards each other.

2. Holding device according to claim 1,
**characterized in that**
said support surfaces (14, 16) are designed as a single piece with the respective holding arm (18, 20).

3. Holding device according to claim 1 and 2,
**characterized in that**
said holding arms (18, 20) are movable towards each other by means of a slewing or hinge joint (22).

4. Holding device according to claim 1,
**characterized, in that**
said holding arms (18, 20) are made of an elastic and bendable material.

5. Holding device according to claim 4,
**characterized in that**
said holding arms (18, 20) and/or the corresponding support surfaces (14, 16) are designed as a single piece.

6. Holding device according to one of the preceding claims,
**characterized in that**
said support surfaces (14, 16) are of circular or annular, square or rectangular, bar-shaped or cross-shaped design.

7. Holding device according to one of the preceding claims,
**characterized in that**
said support surfaces (14, 16) have an exchangeable cover (28, 30) for the spectacle lenses to be placed upon.

8. Holding device according to claim 7,
**characterized in that**
the cover (28, 30) is of convex design.

9. Holding device according to claims 7 or 8,
**characterized in that**
said cover (28, 30) is made of fabric, paper or plastic.

10. Holding device according to one of the preceding claims,
**characterized in that**
said holding device (10) is detachably fixed to a wall, a mirror or a different surface by means of a fixing means (34).

11. Holding device according to one of the preceding claims
**characterized in that**
said support surfaces (14, 16) and said holding arms (18, 20) are made of metal, a metal alloy, ceramics, wood, glass or plastic.

## Revendications

1. Support pour lunettes, notamment pour sa fixation sur des parois, glaces ou d'autres surfaces, le support (10) comportant deux surfaces d'appui (14, 16) pour la mise en place et l'appui des verres de lunette,
**caractérisé en ce que** les surfaces d'appui (14, 16) sont disposées respectivement sur une extrémité chacune d'un bras de support (18, 20) et **en ce que** les surfaces d'appui (14, 16) sont conformées, avec les bras de support (18, 20), de façon mobile l'une par rapport à l'autre.

2. Support selon la revendication 1,
**caractérisé en ce que** les surfaces d'appui (14, 16) sont prévues sous forme monobloc avec le bras de support (18, 20) correspondant.

3. Support selon la revendication 1 ou 2,
**caractérisé en ce que**
les bras de support (18, 20) sont mobiles l'un par rapport à l'autre grâce à une liaison pivotante ou par articulation (22).

4. Support selon la revendication 1,
**caractérisé en ce que**
les bras de support (18, 20) sont réalisés en un matériau élastique et flexible.

5. Support selon la revendication 4,
**caractérisé en ce que**
les bras de support (18, 20) et/ou les surfaces d'appui (14,16) sont prévus sous forme monobloc.

6. Support selon l'une des revendications précédentes,
**caractérisé en ce que**
les surfaces d'appui (14, 16) sont prévues sous forme circulaire ou annulaire, carrée ou rectangulaire, d'aiguille ou de croix.

7. Support selon l'une des revendications précédentes,
**caractérisé en ce que**
les surfaces d'appui (14, 16) comportent une coiffe remplaçable (28, 30) pour l'appui des verres de lunette.

8. Support selon la revendication 7,
**caractérisé en ce que**
la coiffe (28, 30) est prévue sous forme convexe.

9. Support selon la revendication 7 ou 8,
**caractérisé en ce que**
la coiffe (28, 30) est réalisée en tissu, papier ou plastique.

10. Support selon l'une des revendications précédentes,
**caractérisé en ce que**
le support (10) est fixé, grâce à un dispositif de fixation (34), sur une paroi, une glace ou une autre surface quelconque de manière amovible.

11. Support selon l'une des revendications précédentes,
**caractérisé en ce que**
les surfaces d'appui (14, 16) et les bras de support (18, 20) sont réalisés en métal, en un alliage métallique, en céramique, bois, verre ou plastique.
